(19) Europäisches Patentamt
European Patent Office
Office européen des brevets

(11) **EP 2 105 723 B1**

(12) **EUROPEAN PATENT SPECIFICATION**

(45) Date of publication and mention
of the grant of the patent:
**15.04.2020  Bulletin 2020/16**

(51) Int Cl.:
***G01N 15/14*** *(2006.01)*    ***G01N 35/00*** *(2006.01)*

(21) Application number: **09156132.4**

(22) Date of filing: **25.03.2009**

(54) **Sample analyzer, sample analyzing method and computer program product**

Probenanalysegerät, Probenanalyseverfahren und Computerprogrammprodukt

Analyseur d'échantillons, procédé d'analyse d'échantillons et produit de programme informatique

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **28.03.2008  JP 2008088828**
**28.03.2008  JP 2008088825**
**28.03.2008  JP 2008088826**

(43) Date of publication of application:
**30.09.2009  Bulletin 2009/40**

(73) Proprietor: **Sysmex Corporation**
**Kobe-shi, Hyogo 651-0073 (JP)**

(72) Inventors:
• **Nagai, Takaaki**
**Hyogo 651-0073 (JP)**
• **Ikeda, Yutaka**
**Hyogo 651-0073 (JP)**
• **Narisada, Noriyuki**
**Hyogo 651-0073 (JP)**

(74) Representative: **Hoffmann Eitle**
**Patent- und Rechtsanwälte PartmbB**
**Arabellastraße 30**
**81925 München (DE)**

(56) References cited:
**EP-A2- 1 600 779       EP-A2- 1 710 558**
**US-A1- 2007 111 197    US-A1- 2007 269 897**

**Description**

FIELD OF THE INVENTION

The present invention relates to a sample analyzer, a sample analyzing method, and computer program product for analyzing a sample such as blood, urine and the like.

BACKGROUND

Particle analyzers for classifying particles in a sample such as blood and urine and the like into a plurality of types of particles are known.

For example, U.S. Patent Publication No. 2007/0111197 discloses a blood analyzer which pre-stores, in a memory, analysis conditions corresponding to animal types, and changes the setting to the correct animal type and reanalyzes a sample using analysis conditions corresponding to the correct animal type after the setting has been changed, when the sample has been analyzed using an incorrect analysis condition. Specifically, this blood analyzer changes the setting range of the fraction level used for fractionating the particles in a particle distribution diagram in accordance with the type of animal.

U.S. Patent No. 6,391,263 also discloses a blood analyzer for analyzing predetermined components in a sample by changing the degree of detection sensitivity for detecting the components in the sample according to the animal type.

Japanese Patent Publication No. 2002-277381 also discloses a particle analyzer which executes a first processing for discriminating leukocytes and bacteria from other particles in a sample using a first threshold value and a second processing for discriminating only leukocytes in the sample from other particles which may include bacteria using a second threshold value that is larger than the first threshold value, while a flow of a single measurement sample is being formed within a flow cell, when it has been determined that there is a high concentration of bacteria in the sample based on a result of the first processing. Samples which contain a high concentration of bacteria can therefore be accurately measured.

The blood analyzer disclosed in U.S. Patent Publication No. 2007/0111197 fixedly allocates a predetermined analysis condition to a predetermined animal type. However, the allocated analysis condition is not necessarily the optimum condition for the analysis of the target sample when analyzing samples of various types. A problem therefore arises in that analysis precision may be inadequate when the allocated analysis condition is not a suitable condition.

The blood analyzer disclosed in U.S. Patent No. 6,391,263 requires a sample to be re-aspirated and re-measured to correct the measurement value when there is a low reliability of the analysis result based on detection data obtained at the set detection sensitivity. A problem arises in that the user must re-obtain and measure the sample which requires remeasurement, thus complicating the operation. Furthermore, the disclosure of the particle analyzer of Japanese Patent Publication No. 2002-277381 does not suggest art for changing the condition for detecting particles in a sample, although there is mention of art for accurately measuring a sample which contains a high concentration of bacteria.

SUMMARY

In accordance with a first aspect, the present invention provides a sample analyzer in accordance with claim 1.

In accordance with a second aspect, the present invention provides a sample analyzing method in accordance with claim 5.

In accordance with a third aspect, the present invention provides a computer program product for enabling a computer to control a sample analyzer in accordance with claim 6.

BRIEF DESCRIPTION OF THE DRAWINGS

FIG. 1 is a perspective view schematically showing the structure of the first embodiment of the sample analyzer of the present invention;

FIG. 2 is a block diagram showing the structure of the measuring device of the sample analyzer of the first embodiment of the present invention;

FIG. 3 is a block diagram schematically illustrating the structure of the sample preparing section of the first embodiment of the present invention;

FIG. 4 is a block diagram schematically illustrating the structure of the detecting section and the analog processing section of the first embodiment of the present invention;

FIG. 5 is a block diagram showing the structure of the operation and display device of the sample analyzer of the first embodiment of the present invention;

FIG. 6 shows an example of the data structure of the patient information storing section;

FIG. 7 shows an example of a scattergram produced by the leukocyte classification measurement (DIFF measurement);

FIG. 8 shows an example of the relationship between sampling values and lymphocyte distribution region in the scattergram produced by the DIFF measurement;

FIG. 9 is a flow chart showing the CPU processing sequences of the operation display device and controller of the control board of the measuring device of the first embodiment of the present invention;

FIG. 10 is a flow chart showing the CPU analysis processing sequence of the operation display device of the first embodiment of the present invention;

FIG. 11 is a flow chart showing the CPU classification data selection processing sequence of the operation display device of the first embodiment of the present invention;

FIG. 12 shows an example of a screen for displaying the classification results of the display device of the operation display device of the first embodiment of the present invention;

FIG. 13 is a flow chart showing the CPU processing sequences of the operation display device and controller of the control board of the measuring device of a second embodiment which does not form part of the present invention;

FIG. 14 is a flow chart showing the measurement processing sequence of the controller of the measurement device of the second embodiment which does not form part of the present invention; and

FIG. 15 is a flow chart showing the CPU analysis processing sequence of the operation display device of the second embodiment which does not form part of the present invention.

## DETAILED DESCRIPTION OF THE EMBODIMENT

A blood analyzer for analyzing blood is specifically described hereinafter as an example of the sample analyzer of the present embodiment based on the drawings. The analysis process thus is a blood cell classification process, and the analysis data are generated as classification data.

[First Embodiment]

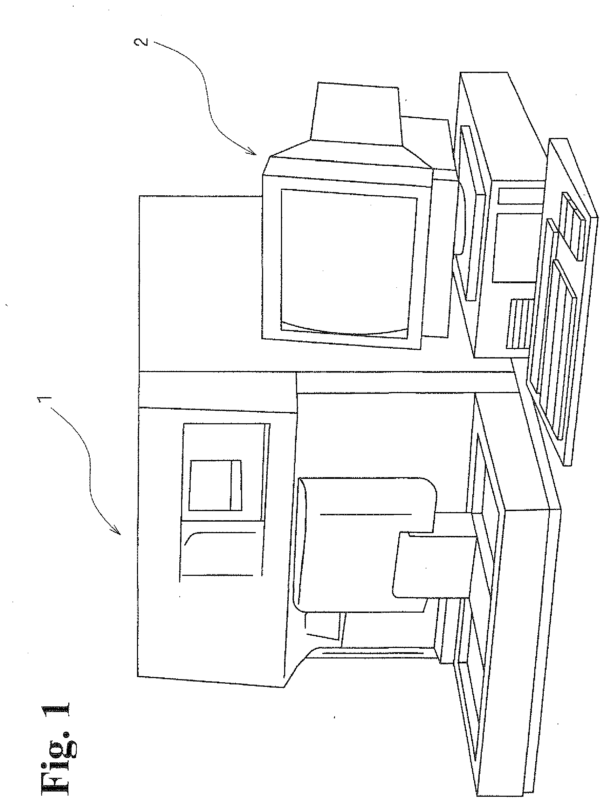

FIG. 1 is a perspective view schematically showing the structure of the first embodiment of the sample analyzer of the present invention; As shown in FIG. 1, the sample analyze of the first embodiment is configured by a measuring device 1, and an operation and display device 2 which is connected to the measuring device 1 so as to be capable of data communication therewith.

The measuring device 1 and the operation and display device 2 are connected via a communication line which is not shown in the drawing. The operation and display device 2 controls the operation of the measuring device 1, processes the measurement data output from the measuring device 1, and obtains analysis results through data communication with the measuring device 1. The measuring device 1 and the operation and display device 2 may also be connected over a network, or may be configured as a single integrated device so as to send and receive data by interprocess communication and the like.

The measuring device 1 detects characteristics information of the leukocytes, reticulocytes, and platelets in the blood using flow cytometry, and transmits the detection data as measurement data to the operation and display device 2. Flow cytometry is a measurement method which forms a sample flow that includes a measurement sample, detects light such as forward scattered light, side scattered light, and side fluorescent light that is emitted by the particles (blood cells) in the measurement sample when the measurement sample is irradiated by laser light to detect the particles (blood cells) in the measurement sample.

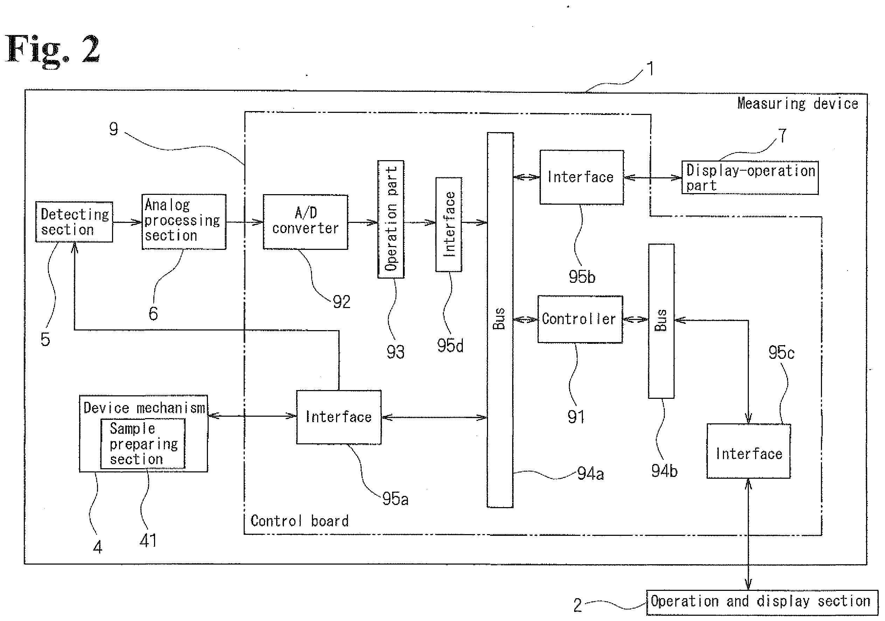

FIG. 2 is a block diagram showing the structure of the measuring device 1 of the sample analyzer of the first embodiment of the present invention. The measuring device 1 is provided with a device mechanism 4, detecting section 5 for executing the measurement of a measurement sample, an analog processing section 6 for processing the output of the detecting section 5, display and operation section 7, and control board 9 for controlling the operation of the various hardware.

The control board 9 is provided with a controller 91 which has a control processor and a memory for the operation of the control processor, twelve-bit A/D converter 92 for converting the signals output from the analog processing section 6 to digital signals, and an operation section 93 for storing the digital signals output from the A/D converter 92 and executing a process for selecting data to be output top the controller 91. The controller 91 is connected to the display and operation section 7 through a bus 94a and an interface 95b, connected to the device mechanism 4 through the bus 94a and an interface 95a, and connected to the operation and display device 2 through a bus 94b and an interface 95c. The operation section 93 outputs the operation results to the controller 91 through an interface 95d and the bus 94a. The controller 91 also transmits the operation results (measurement data) to the operation and display device 2.

The device mechanism 4 is provided with a sample preparing section 41 for preparing a measurement sample from blood and reagent. The sample preparing section 41 prepares leukocyte measurement samples, reticulocyte measurement samples, and platelet measurement samples.

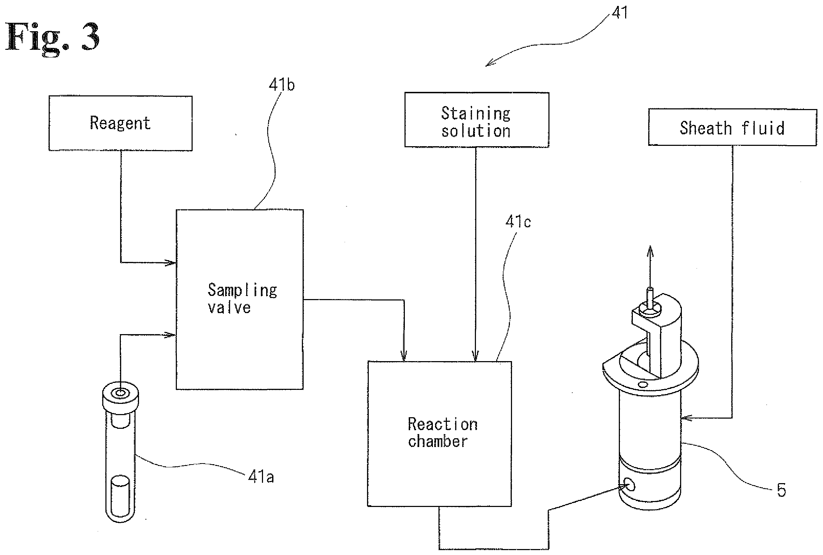

FIG. 3 is a block diagram schematically illustrating the structure of the sample preparing section 41 of the first embodiment of the present invention. The sample preparing section 41 is provided with a collection tube 41a to be filled with a predetermined amount of blood, sampling valve 41b for aspirating the blood, and a reaction chamber 41c.

The sampling valve 41b is configured to be capable of determining the amount of blood within the collection tube 41a aspirated by an aspirating pipette which is not shown in the drawing. The reaction chamber 41c is connected to the sampling valve 41b, and is configured to be capable of mixing a predetermined reagent and staining solution with the fixed amount of blood determined by the sampling valve 41b. The reaction chamber 41c is also connected to the detecting section 5, and is configured so that a measurement sample prepared by mixing the predetermined reagent and staining solution in the reaction chamber 41c inflows to the detecting section 5.

The sample preparing section 41 can thus prepare a measurement sample in which the leukocytes are stained and the erythrocytes are hemolyzed as the leukocyte measurement sample. The sample preparing section 41 can also prepare a measurement sample in which the reticulocytes are stained as a reticulocyte measurement sample, and prepare a measurement sample in which the platelets are stained as a platelet measurement sample. The prepared measurement sample is supplied together with a sheath fluid to a sheath flow cell of the detecting section 5 which will be described later.

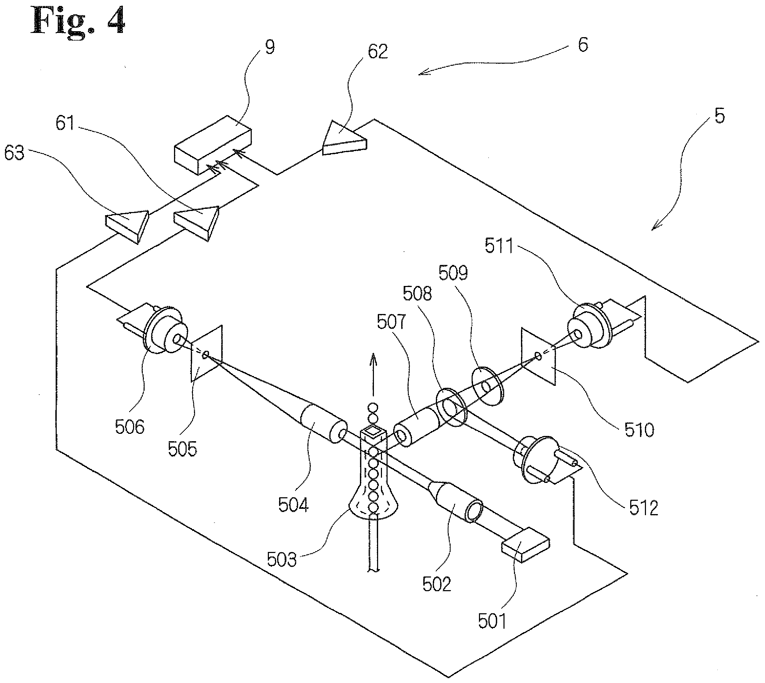

FIG. 4 is a block diagram schematically showing the structure of the detecting section 5 and the analog processing section 6 of the first embodiment of the present invention. As shown in FIG. 4, the detecting section 5 is provided with a light-emitting part 501 for emitting laser light, irradiating lens unit 502, sheath flow cell 503 for irradiating by laser light, collective lens 504 disposed on a line extending in the direction of advancement of the light from the light-emitting part 50, pinhole 505 and PD (photodiode) 506 (a beam stopper which is not shown in the drawing is disposed between the sheath flow cell 503 and the collective lens 504), collective lens 507 which is disposed in a direction which intersects the direction of the light emitted from the light-emitting part 501, dichroic mirror 508, optical filter 509, pinhole 510 and APD (avalanche photodiode) 511, and PD (photodiode) 512 which is disposed on the dichroic mirror 508 side.

The light-emitting part 501 is provided to irradiate light on a sample flow which contains a measurement sample passing through the interior of the sheath flow cell 503. The irradiating lens unit 502 is provided to render the light emitted from the light-emitting part 501 into parallel rays. The PD 506 is provided to receive the forward scattered light emitted from the sheath flow cell 503 Note that information relating to the size of the particles (blood cells) in the measurement sample can be obtained from the forward scattered light emitted from the sheath flow cell 503.

The dichroic mirror 508 is provided to separate the side scattered light and the side fluorescent light emitted from the sheath flow cell 503. Specifically, the dichroic mirror 508 is provided to direct the side scattered light emitted from the sheath flow cell 503 to the PD 512, and to direct the side fluorescent light emitted from the sheath flow cell 503 to the APD 511. The PD 512 is also provided to receive the side scattered light. Internal information relating to the size and the like of the nucleus of the particles (blood cells) within the measurement sample can be obtained from the side scattered light emitted from the sheath flow cell 503.

The APD 511 is also provided to receive the side fluorescent light. When light irradiates a fluorescent substance such as a stained blood cell, light is emitted which has a longer wavelength that that of the irradiating light. The intensity of the fluorescence increases as the degree of staining increases. Therefore, characteristic information related to the degree of staining of the blood cell can be obtained by measuring the intensity of the side fluorescent light emitted from the sheath flow cell 503. It is therefore possible to perform other measurements in addition to classifying leukocytes by the difference in the side fluorescent light intensity. PD 506, PD 512, and APD 511 convert the optical signals of the respectively received light to electrical signals, and the converted electrical signals are then amplified by amplifiers 61, 62, and 63 and the amplified signals are transmitted to the control board 9.

In the first embodiment, the light-emitting part 501 emits light with an output of 3.4 mW during the leukocyte classification measurement (hereinafter referred to as "DIFF measurement"). The light-emitting part 501 also emits light with an output of 6 mW during the reticulocyte measurement (hereinafter referred to as "RET measurement") . The light-emitting part also emits light at an output of 10 mW during platelet measurement (hereinafter referred to as "PLT measurement").

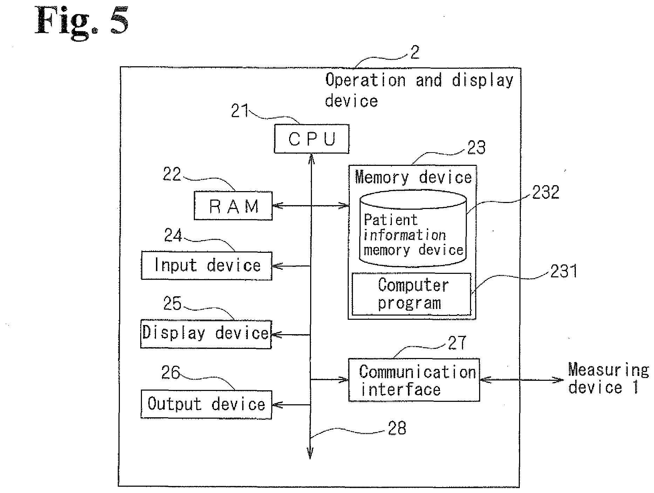

FIG. 5 is a block diagram showing the structure of the operation and display device 2 of the sample analyzer of the first embodiment of the present invention. As shown in FIG. 5, the operation and display device 2 is configured by a CPU (central processing unit) 21, RAM 22, memory device 23, input device 24, display device 25, output device 26, communication interface 27, and an internal bus 28 which is connected to the previously described hardware. The CPU 21 is connected to each piece of previously mentioned hardware of the operation and display device 2 through the internal bus 28, and controls the operation of the aforesaid hardware and executes various software functions according to a computer program 231 which is stored in the memory device 23. RAM 22 is configured of a volatile memory such as an SRAM, SDRAM or the like, and stores load modules during the execution of the computer program 231 as well as temporary data generated during the execution of the computer program 231.

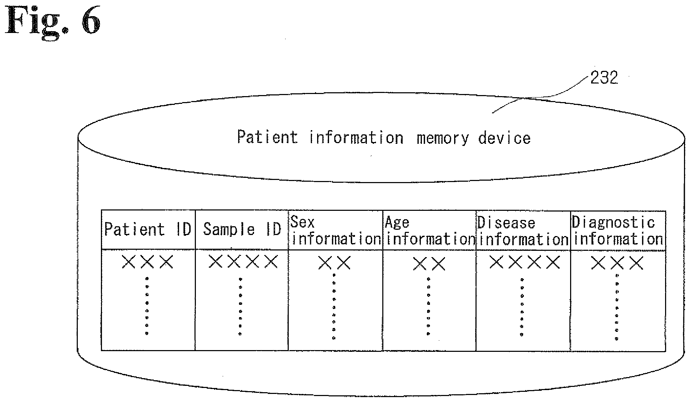

The memory device 23 is configured by an internal fixed type memory device (hard disk) or the like. The memory device 23 is also provided with a patient information memory device 232 which stores information relating to patients and including the age information of the patient (subject) associated with identification information which can be obtained by reading a barcode label. FIG. 6 shows an example of the data structure of the patient information memory device 232. As shown in FIG. 6, the patient information memory device 232 stores subject ID which is the identification information that identifies the subject, sex information of the subject, age information of the subject, disease information relating the content of the disease, and treatment information which identifies the treatment, and all of which is associated with a sample ID which is which is the identification information obtained by reading a barcode label. Note that the patient information memory device 232 is not limited to being provided in the memory device 23 insofar as the patient information may also be prestored on an external computer and obtained by querying the external computer through the communication interface 27.

The communication interface 27 is connected to the internal bus 28, and is capable of sending and receiving data when connected to the measuring device 1 through a communication line. That is, the communication interface 27 sends information instructing the start of a measurement and the like to the measuring device 1, and receives measurement data.

The input device 24 is a data input medium such as a keyboard and mouse or the like. The display device 25 is a display device such as a CRT monitor, LCD or the like, and graphically displays the analysis results. The output device 26 is a printing device such as a laser printer, inkjet printer or the like.

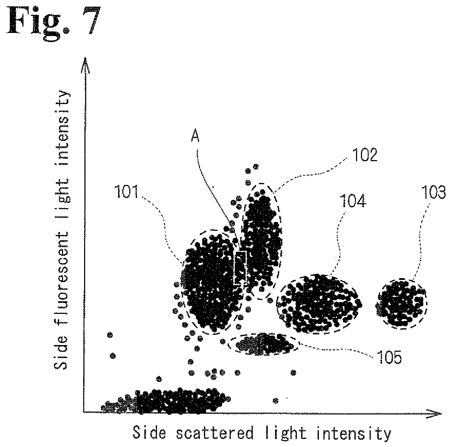

In the measuring device 1 and operation and display device 2 of the sample analyzer having the structure described above, a scattergram such as that shown in FIG. 7 is prepared and displayed on the display device 25 when adult blood is measured and the leukocytes contained in the blood have been classified as lymphocytes, monocytes, neutrophils, basophils, and eosinophils. FIG. 7 shows an example of a scattergram produced by the leukocyte classification measurement (DIFF measurement). In FIG. 7, the vertical axis represents the side fluorescent light intensity, and the horizontal axis represents the side scattered light intensity, respectively. The method of classifying leukocytes used by the sample analyzer of the first embodiment is described below.

In the sample analyzer of the first embodiment, a lymphocyte distribution region 101 in which lymphocytes are assumed to be distributed, a monocyte distribution region 102 in which monocytes are assumed to be distributed, an eosinphil distribution region 103 in which eosinophils are assumed to be distributed, a neutrophil distribution region 104 in which neutrophils are assumed to be distributed, and a basophil distribution region in which basophils are assumed to be distributed are predetermined based on previous statistical values of adult blood, as shown in FIG. 7. After integer sequence information has been sampled based on the measurement data, the degree of belonging of blood cells to each distribution region is then calculated for the lymphocyte distribution region 101, monocyte distribution region 102, eosinophil distribution region 103, neutrophil distribution region 104, and basophil distribution region 105, and each blood cell is classified into a specific type of blood cell according to the calculated degree of belonging. The numbers of lymphocytes, monocytes and the like can then be determined by counting the classified blood cells. This leukocyte classification method is described in detail in United States Patent No. 5, 555, 196. Note that the computer program for executing this leukocyte classification method, and the data used in the execution of this computer program are prestored in the memory device 23.

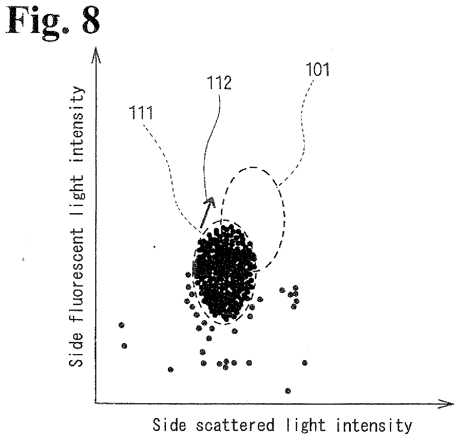

The present inventors acknowledge that the blood cells contained in child blood have lower stainability than blood cell contained in adult blood. It is therefore clear that the sampling values will be distributed somewhat lower in each region of the original distributions shown in FIG. 7 in measurement data obtained by measuring child blood. FIG. 8 shows an example of the relationship between sampling values and the lymphocyte distribution region 101 of a scattergram prepared for a DIFF measurement.

As shown in FIG. 8, the sampling values are clustered on the margin of the lymphocyte distribution region 101 in the case of measurement data of adult blood. However, when the measurement data are for a child blood rather than adult blood, both the fluorescent light intensity and the scattered light intensity are lower values when measured since the child blood has a lower stainability than does adult blood. The sampling values therefore cluster near the edge of the region 111 which is below the lymphocyte distribution region 101.

When the distribution trend from the scattergram is entirely shifted below the assumed region as described above, the measurement data can be determined to be data from child blood, and it can be understood that the region 111 in which the sampling values cluster must be shifted in the direction of the arrow 112 to improve the accuracy of the classification process. A means is disclosed below for shifting the measurement data of child blood in order to realize a classification process which has better accuracy using the same blood cell classification method as when classifying leukocytes based on adult blood, even when the measurement data are data from child blood.

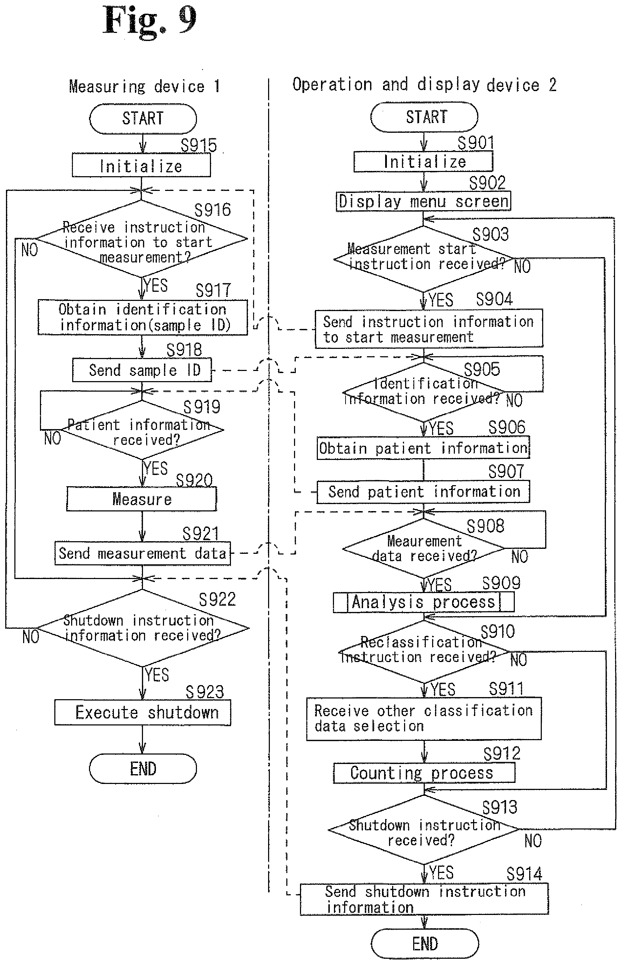

FIG. 9 is a flow chart showing the processing sequence of the CPU 21 of the operation display device 2 and the controller 91 of the control board 9 of the measuring device 1 of the first embodiment of the present invention. The controller 91 of the measuring device 1 executes initialization (step S915) and an operations check of the each part of the measuring device 1 when the starting of the measuring device 1 is detected. The CPU 21 of the operation display device 2 also executes initialization (program initialization) (step S901), and displays a menu screen on the display device 25 (step S902) when the starting of the operation display device 2 is detected. The selection of DIFF measurement, RET measurement, and CBC measurement, and both a measurement start instruction, and shutdown instruction can be input from the menu screen. The case wherein the DIFF measurement has been selected on the menu screen in the first embodiment is described below.

The CPU 21 of the operation display device 2 determines whether or not a measurement start instruction has been received (step S903) ; when the CPU 21 determines that the measurement start instruction has been received (step S903: YES), the CPU 21 transmits the instruction information specifying the start of measurement to the measuring device 1 (step S904). The controller 91 of the measuring device 1 determines whether or not instruction information specifying to start a measurement has been received (step S916); when the controller 91 has determined that a instruction information specifying to start a measurement has been received (step S916: YES), the controller 91 has the barcode reader (not shown in the drawing) read the barcode label (not shown in the drawing) adhered to the container which contains the blood to obtain the blood identification information (sample ID) (step S917). When the controller 91 has determined that instruction information specifying to start a measurement has not been received (step S916:NO), the controller 91 skips steps 917 through S921.

The controller 91 transmits the obtained identification information (sample ID) to the operation display device 2 (step S918), and the CPU 21 of the operation display device 2 determines whether or not the identification information (sample ID) has been received (step S905). When the CPU 21 determines that the identification information (sample ID) has not been received (step S905: NO), the CPU 21 enters a reception standby state. When the CPU 21 determines that the identification information (sample ID) has been received (step S905: YES), the CPU 21 obtains the patient information by querying the patient information memory section 232 of the memory device 23 (step S906), and transmits the patient information to the measuring device 1 (step S907).

The controller 91 of the measuring device 1 then determines whether or not the patient information has been received (step S919) ; when the controller 91 determines that the patient information has not been received (step S919: NO), the controller 91 enters a reception standby state. When the controller 91 determines that the patient information has been received (step S919: YES), the controller 91 controls the sample preparing section 41 so as to prepare a measurement sample, and thereafter starts the measurement of the measurement sample (step S920). Specifically, the DIFF measurement is executed, and the electrical signals corresponding to the intensity of the received side scattered light and side fluorescent light are transmitted to the control board 9 via the detecting section 5 and the analog processing section 6. The A/D converter 92 of the control board 9 converts the obtained analog signals to 12-bit digital signals, and the operation section 93 subjects the digital signals output from the A/D converter 92 to predetermined processing, and transmits the processed signals to the controller 91. The controller 91 transmits the received 12-bit integer sequence information as measurement data to the operation display device 2 (step S921).

The CPU 21 of the operation display device 2 determines whether or not the measurement data have been received (step S908); when the CPU 21 determines that the measurement data have been received (step S908: YES), the CPU 21 executes an analysis process based on the received measurement data (step S909) . The CPU 21 skips steps S904 through S909 when the CPU 21 has determined that a measurement start instruction has not been received (step S903: NO), and the CPU 21 enters a reception standby state when the CPU 21 has determined that the measurement data have not been received (step S908: NO).

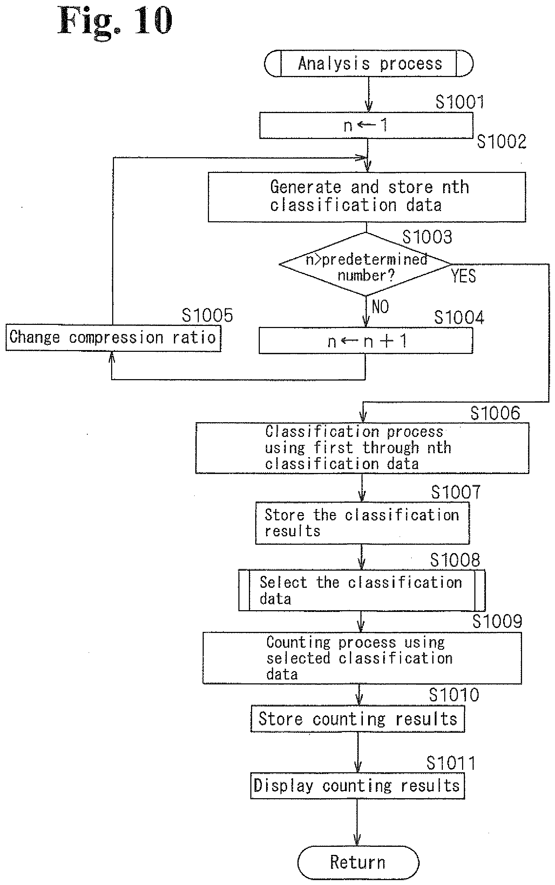

FIG. 10 is a flow chart showing the sequence of the analysis process executed in step S909 of FIG. 9 by the CPU 21 of the operation display device 2 of the first embodiment of the present invention. In FIG. 10, the CPU 21 of the operation display device 2 sets the counter n to an initial value 1 (step S1001), generates $n^{th}$ classification data by compressing the measurement data (12-bit integer sequence information) obtained from the measuring device 1 to 8-bit integer sequence information, and stores this data in the memory device 23 (step S1002).

The CPU 21 determines whether or not n is greater than a predetermined number (step S1003); when the CPU 21 has determined that n is less than the predetermined number (step S1003: NO), the CPU 21 increments n by 1 (step S1004), changes the compression ratio of the measurement data (step S1005), and returns the process to step S1002. Then, the above process is repeated. When the CPU 21 has determined that n is greater than the predetermined number (step S1003: YES), the CPU 21 executes the classification process using the respective first through $n^{th}$ classification data (step S1006), and stores the respective classification results in the memory device 23 (step S1007).

Specifically, when the CPU 21 generates the classification data, the 12-bit integer sequence information obtained from the measurement device 1 is compressed by a predetermined compression ratio. For example, the information may be compressed to 8-bit integer sequence information, compressed to 10-bit integer sequence information, or an optional compression ratio may be selected.

In the first embodiment, measurement data are pre-obtained as integer sequence information which has a number of bits (12-bits) that is greater than the number of bits (8-bits) used as classification data, and a plurality of classification data at various compression ratios are generated by compressing the pre-obtained measurement data by an optional compression ratio. A proportion which maintains the continuity of the integer sequence values can be increased thereby. For example, since the 12-bit integer sequence information is multiplied 1.2/16 times when generating the second classification data for child blood compared to multiplying the 12-bit integer sequence information 1/16 times when generating the classification data for adult blood, the range of the measurement data which are the same integer values when multiplied 1.2/16 times is broadened, thus making errors difficult to occur.

More specifically, consider the case when the number of each element (X1, X2) (where X1, X2=0, 1, 2...) is designated F (X1, X2) in two-dimensional distribution data DN which has, for example, N(N (N being a natural number) individual elements, and the two-dimensional distribution data Dn are compressed to two-dimensional distribution data Dm which has M (M (M being a natural number) individual elements. Furthermore, M<N obtains.

Each element (X1, X2) in the two-dimensional distribution data Dn which has N(N individual elements corresponds to the elements (U1, U2) (where U1, U2=0, 1, 2,..., M) shown in equation (1) in the distribution data Dm. In equation (1), Int(x) is a function which represents the integer part of the argument x. This is equivalent, for example, to the process of compressing 12-bit measurement data to 8-bits.

$$(U1, \ U2) \ = \ (Int(X1(M/N), \ Int(X2(M/N) \qquad \ldots \ (1)$$

Next, when the two-dimensional distribution data DL which has L(L individual elements in a partial region within the two-dimensional distribution data Dm are converted to two-dimensional distribution data which has M(M individual elements (L<M<N), the elements (X1, X2) (where X1, X2=0, 1, 2,..., N(L/M) in the distribution data Dn corresponds to the elements (V1, V2) (where V1, V2=0, 1, 2,..., M) in the distribution data Dml, as shown in equation (2). This is equivalent to a process which shifts up the 8-bit data.

$$(V1, \ V2) \ = \ (Int(X1(M2/(N(L), \ Int(X2(M2/(N(L) \qquad \ldots \ (2)$$

That is, the number of elements of the distribution data Dml can be calculated and converted to smooth distribution data by initially converting (expanding) the two-dimensional distribution data DL which have an L(L element partial region to two-dimensional distribution data which have N(N elements, and then converting to two-dimensional distribution data which have M(M elements.

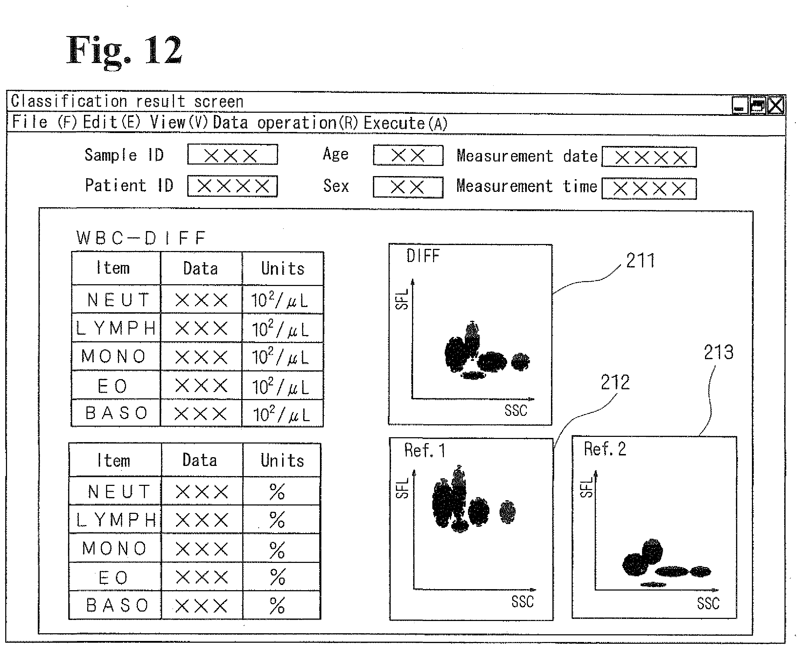

Returning to FIG. 10, the CPU 21 of the operation display device 2 selects one classification data from the plurality of classification data stored in the memory device 23 (step S1008), reads the selected classification data from the memory device 23 and counts the number of classified lymphocytes, monocytes, eosinophils, neutrophils, and basophils (step S10C9), and stores the count results in the memory device 23 (step S1010). The CPU 21 also generates a scattergram such as that shown in FIG. 7, displays the count results and the scattergram as shown in FIG. 12 on the display device 25 as leukocyte classification results (step S1011), and the process returns to step S910 of FIG. 9. The user can visually confirm the scattergram displayed on the display device 25. Then the user can input execution instructions for executing a reclassification process according to the distribution conditions of the sampling values.

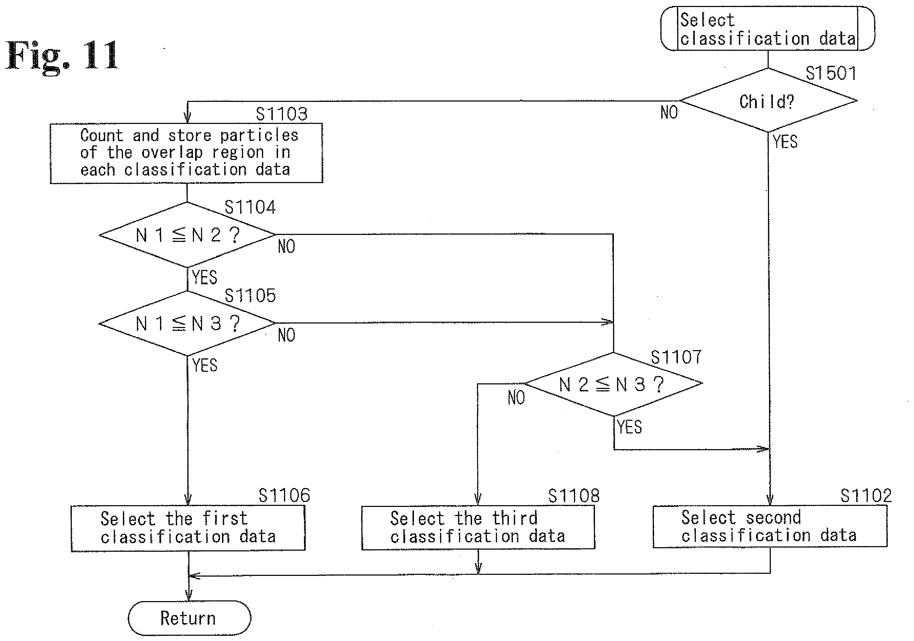

The sequence of the classification data selection process shown in step S1008 of FIG. 10 is described below. FIG. 11 is a flow chart showing the sequence of the classification data selection process performed by the CPU 21 of the operation display device 2 of the first embodiment of the present invention. Note that in the sample analyzer of the first embodiment, the predetermined number shown in FIG. 10 is set at 3.

The CPU 21 of the operation processing device 2 determines whether or not a subject is a child based on the age information included in the patient information received from the measuring device 1 (step S1101). "Child" in this case may mean a newborn, infant, or toddler. The user of the sample analyzer of the first embodiment of the present invention may optionally set the sample analyzer, for example, so that a subject admitted to a pediatric department or obstetrics and gynecology department is designated as a "child," or a child who is a preschooler may be designated as a "child," rather than a subject below a predetermined age. The manufacturer who fabricates the sample analyzer may also set the range of the "child."

When the CPU 21 has determined that the subject is a child (step S1101: YES), the CPU 21 selects a second classification information obtained by a second compression ratio (step S1102), and the process returns to step S1009.

When the CPU 21 has determined that the subject is not a child (step S1101: NO), the CPU 21 counts the particles contained in a region in which there are overlapping collection region of sampling values of the lymphocytes, monocytes, eosinophils, neutrophils, basophils and the like, for example region A in FIG. 7 (hereinafter referred to as "overlap region"), among the first through third classification data, and stores the counts in the RAM 22 (step S1103). The CPU 21 selects the classification data which has an overlap region with the least number of particles since the blood cell classification process should perform well when the overlap region has few particles. That is, the CPU 21 first determines whether or not the particle number (N1) of the overlap region in the first classification data is less than the particle number (N2) of the overlap region in the second classification data (step S1104).

When the CPU 21 has determined that the particle number (N1) of the overlap region in the first classification data is less than the particle number (N2) of the overlap region in the second classification data (step S1104: YES), the CPU 21 then determines whether or not the particle number (N1) of the overlap region in the first classification data is less than the particle number (N3) of the overlap region in the third classification data (step S1105).

When the CPU 21 has determined that the particle number (N1) of the overlap region in the first classification data is less than the particle number (N3) of the overlap region in the third classification data (step S1105: YES), the CPU 21 selects the first classification data (step S1106), and the process returns to step S1009.

When the CPU 21 has determined that the particle number (N1) of the overlap region in the first classification data is greater than the particle number (N2) of the overlap region in the second classification data (step S1104: NO), or when the CPU 21 has determined that the particle number (N1) of the overlap region in the first classification data is greater than the particle number (N3) of the overlap region in the third classification data (step S1105: NO), then the CPU 21 determines whether or not the particle number (N2) of the overlap region in the second classification data is less than the particle number (N3) of the overlap region in the third classification data (step S1107).

When the CPU 21 has determined that the particle number (N2) of the overlap region in the second classification data is less than the particle number (N3) of the overlap region in the third classification data (step S1107: YES), the CPU 21 selects the second classification data (step S1102), and the process returns to step S1009. When the CPU 21 has determined that the particle number (N2) of the overlap region in the second classification data is greater than the particle number (N3) of the overlap region in the third classification data (step S1107: NO), the CPU 21 selects the third classification data (step S1108), and the process returns to step S1009.

Note that the method for selecting classification data is not specifically limited, inasmuch as, for example, the CPU 21 may make the selection based on the position of appearance, and the degree of overlap of the lymphocyte, monocyte, basophil, neutrophil, and eosinophil collection regions or the like. Specifically, the selection may be made by (1) selecting via the magnitude of the number of particles contained in the region in which there are overlapping collection regions, (2) selecting via the magnitude of the distance between the representative value of the collection region and the representative value of each presumed region, (3) selecting via the relative position of the collection region and each presumed region, and (4) selecting via the magnitude of the surface area of the collection region and the surface area of each presumed region, or combinations of these methods.

Returning to FIG. 9, the CPU 21 of the operation display device 2 determines whether or not a reclassification instruction specifying the execution of the reclassification process has been received from the user (step S910); when the CPU 21 has determined that the reclassification instruction has not been received (step S910: NO), the CPU 21 skips steps S911 and S912. When the CPU 21 has determined that the reclassification instruction has been received (step S910: YES), the CPU 21 receives the selection of other classification data (step S911), and executes the counting process based on this selected classification data (step S912).

FIG. 12 shows an example of a screen displaying the classification results on the display device 25 of the operation display device 2 of the first embodiment of the present invention. In FIG. 12, the classification results based on the classification data are displayed in the case of n=3 as in FIG. 10, that is, three types of classification data having mutually different compression ratios are generated. The classification results using the classification data selected by the CPU 21 are displayed in the primary result display region 211, and the classification results using the other classification data are displayed in the secondary result display regions 212 and 213.

The reclassification instruction is issued by using the mouse to select either of the secondary display regions 212 and 213 which display classification results based on classification data which the user wants reclassified. For example, when the secondary display region 212 is selected, the displayed contents of the secondary display region 212 and the primary display region 211 are switched, and the counting process is executed.

Returning to FIG. 9, the CPU 21 of the operation display device 2 determines whether or not a shutdown instruction has been received (step S913); when the CPU 21 has determined that a shutdown instruction has not been received (step S913: NO), the CPU 21 returns the process to step S903, and the previously described process is repeated. When the CPU 21 has determined that a shutdown instruction has been received (step S913: YES), the CPU 21 transmits shutdown instruction information to the measuring device 1 (step S914).

The controller 91 of the measuring device 1 determines whether or not shutdown instruction information has been received (step S922); when the controller 91 has determined that shutdown instruction information has not been received (step S922: NO), the controller 91 returns the process to step S916 and the previously described process is repeated. When the controller 91 has determined that shutdown instruction information has been received (step S922: YES), the controller 91 executes shutdown (step S923) and the process ends.

The first embodiment is capable of executing the counting process using optimum classification data and even in the case of differences such as different animal species, different ages and different sex, by pre-generating a plurality of classification data having mutually different compression ratios and selecting optimum classification data according to the sample. The sample analysis precision can therefore be improved.

[Second Embodiment]

The sample analyzer of a second embodiment which does not form part of the present invention is described in detail below based on the drawings. Structures of the sample analyzer of the second embodiment are identical to the first embodiment are designated by like reference numbers and detailed description thereof is omitted. The second embodiment differs from the first embodiment in that a plurality of classification data having mutually different detection conditions when detection characteristic information are generated at the same compression ratios without pre-generating a plurality of classification data having mutually different compression ratios.

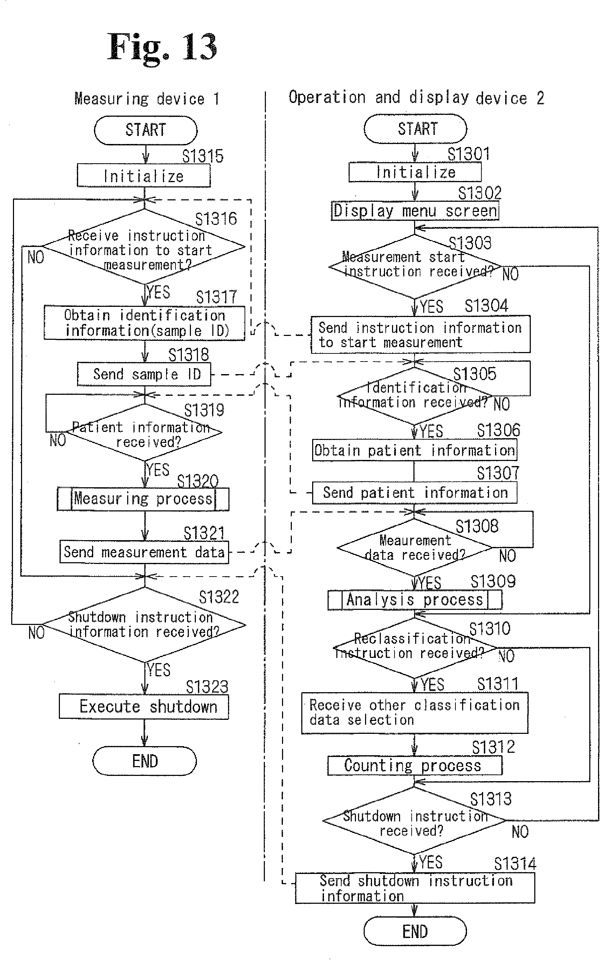

FIG. 13 is a flow chart showing the processing sequence of the CPU 21 of the operation display device 2 and the controller 91 of the control board 9 of the measuring device 1 of the second embodiment. The controller 91 of the measuring device 1 executes initialization (step S1315) and an operations check of the each part of the measuring device 1 when the starting of the measuring device 1 is detected. The CPU 21 of the operation display device 2 also executes initialization (program initialization) (step S1301), and displays a menu screen on the display device 25 (step S1302) when the starting of the operation display device 2 is detected. The selection of DIFF measurement, RET measurement, and CBC measurement, and both a measurement start instruction, and shutdown instruction can be input from the menu screen. The case wherein the DIFF measurement has been selected on the menu screen in the second embodiment is described below.

The CPU 21 of the operation display device 2 determines whether or not a measurement start instruction has been received (step S1303) ; when the CPU 21 has determined that a measurement start instruction has not been received (step S1303: NO), the CPU 21 skips the subsequent steps S1304 through S1309. When the CPU 21 has determined that a measurement start instruction has been received (step S903: YES), the CPU 21 transmits instruction information specifying to start a measurement to the measuring device 1 (step S1304). The controller 91 of the measuring device 1 determines whether or not instruction information specifying to start a measurement has been received (step S1316); when the controller 91 has determined that a instruction information specifying to start a measurement has been received (step S916: YES), the controller 91 has the barcode reader (not shown in the drawing) read the barcode label (not shown in the drawing) adhered to the container which contains the blood to obtain the blood identification information (sample ID) (step S1317). When the controller 91 has determined that instruction information specifying to start a measurement has not been received (step S1316:NO), the controller 91 skips steps 1317 through S1321.

The controller 91 transmits the obtained identification information (sample ID) to the operation display device 2 (step S1318), and the CPU 21 of the operation display device 2 determines whether or not the identification information (sample ID) has been received (step S1305). When the CPU 21 determines that the identification information (sample ID) has not been received (step S1305: NO), the CPU 21 enters a reception standby state. When the CPU 21 determines that the identification information (sample ID) has been received (step S1305: YES), the CPU 21 obtains the patient information by querying the patient information memory section 232 of the memory device 23 (step S1306), and transmits the patient information to the measuring device 1 (step S1307).

The controller 91 of the measuring device 1 then determines whether or not the patient information has been received (step S1319) ; when the controller 91 determines that the patient information has not been received (step S1319: NO), the controller 91 enters a reception standby state. When the controller 91 determines that the patient information has been received (step S1319: YES), the controller 91 controls the sample preparing section 41 so as to prepare a measurement sample, and thereafter starts the measurement of the measurement sample (step S1320). Specifically, the DIFF measurement is executed, and the electrical signals corresponding to the intensity of the received side scattered light and side fluorescent light are transmitted to the control board 9 via the detecting section 5 and the analog processing section 6. The A/D converter 92 of the control board 9 converts the obtained analog signals to 12-bit digital signals, and the operation section 93 subjects the digital signals output from the A/D converter 92 to predetermined processing, and transmits the signals to the controller 91. The controller 91 transmits the received 12-bit integer sequence information as measurement data to the operation display device 2 (step S1321).

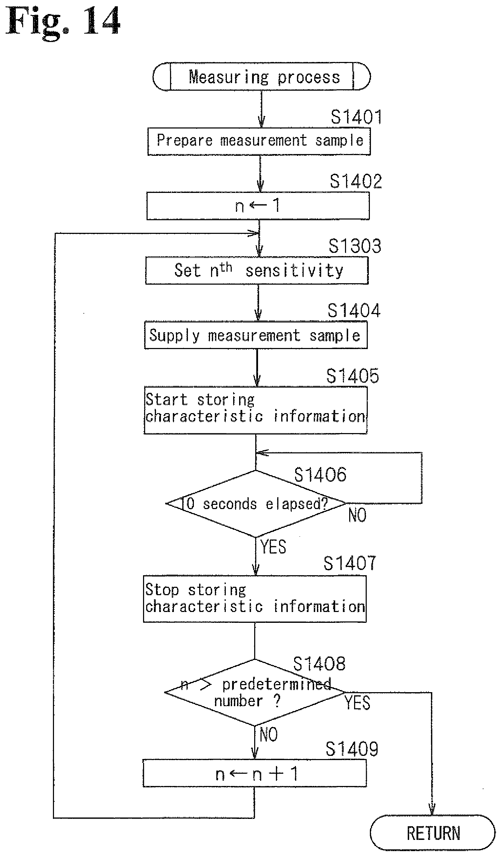

FIG. 14 is a flow chart showing the sequence of the measurement process executed in step S1320 of FIG. 13 by the controller 91 of the control board 9 of the measuring device 1 of the second embodiment which does not form part of the present invention. In FIG. 14, the controller 91 of the measuring device 1 prepares a measurement sample (step S1401), sets the counter n at an initial value of 1 (step S1402), then sets the detection sensitivity at the $n^{th}$ sensitivity as the detection condition of the detecting section 5 of the measuring device 1 (step S1403). The detection sensitivity has a predetermined number of settings. Note that the set detection sensitivity is defined as the detection sensitivity of the PD506, 512, and the APD 511 which are photoreceptors that receive the light emitted from the light-emitting section 501 shown in FIG. 4.

The controller 91 starts supplying the measurement target measurement sample to the sheath flow cell 503 (step S1404), and starts storing the characteristic information detected at the $n^{th}$ detection sensitivity in an internal memory (step S1405). The controller 91 determines whether or not 10 seconds have elapsed since the start of storing characteristic information at the $n^{th}$ detection sensitivity (step S1406) ; when the controller 91 has determined that 10 seconds have not elapsed (step S1406: NO), the controller 91 enters a time-elapse standby state.

When the controller 91 has determined that 10 seconds have elapsed (step S1406: YES), the controller 91 stops storing in the internal memory the characteristic information detected at the $n^{th}$ detection sensitivity (step S1407), and determines whether or not the counter n has exceeded a predetermined number (step S1408). When the controller 91 has determined that n does not exceed the predetermined number (step S1408: NO), the controller 91 increments the counter n by 1 (step S1409), the process returns to step S1403 and the above process is repeated. When the controller 91 has determined that n does exceed the predetermined number (step S1408: YES), the controller 91 returns the process to step S1321 of FIG. 13. The plurality of characteristic information stored in the internal memory of the controller 91 are the measurement data. Note that the time during which the measurement sample is supplied to the sheath flow cell 503 is preset so as to stop the supply after the controller 91 has determined that n exceeds the predetermined number. A plurality of detection sensitivities can therefore be continuously set while a single measurement sample is being supplied to the sheath flow cell 503.

Returning to FIG. 13, the CPU 21 of the operation display device 2 determines whether or not measurement data have been received (step S1308); when the CPU 21 has determined that measurement data have been received (step S1308 : YES), the CPU 21 executes the analysis process based on the received measurement data (step S1309). When the CPU 21 determines that the measurement data have not been received (step S1308: NO), the CPU 21 enters a reception standby state.

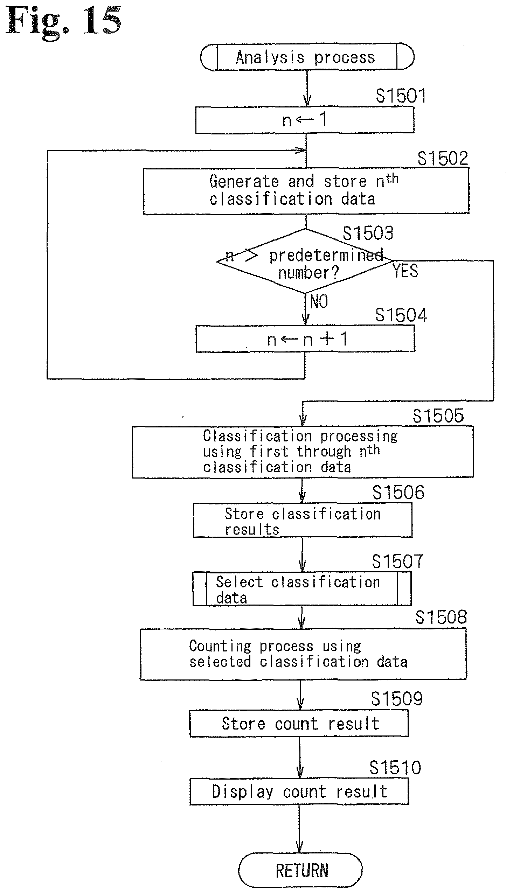

FIG. 15 is a flow chart showing the sequence of the analysis process executed in step S1309 of FIG. 13 by the CPU 21 of the operation display device 2 of the second embodiment. In FIG. 15, the CPU 21 of the operation display device 2 sets the counter n to an initial value 1 (step S1501), generates the $n^{th}$ classification data based on the characteristic information detected at the $n^{th}$ detection sensitivity by compressing the measurement data (12-bit integer sequence information) obtained from the measuring device 1 to 8-bit integer sequence information, and stores this data in the memory device 23 (step S1502).

The CPU 21 determines whether or not n is greater than a predetermined number (step S1503); when the CPU 21 has determined that n is less than the predetermined number (step S1503: NO), the CPU 21 increments n by 1 (step S1504), and returns the process to step S1502 using the same compression ratio. When the CPU 21 has determined that n is greater than the predetermined number (step S1503: YES), the CPU 21 executes the classification process using the respective first through $n^{th}$ classification data (step S1505), and stores the respective classification results in the memory device 23 (step S1506).

Specifically, when the CPU 21 generates the classification data, the 12-bit integer sequence information obtained from the measurement device 1 is compressed by a predetermined compression ratio. For example, the information may be compressed to 8-bit integer sequence information, compressed to 10-bit integer sequence information, or an optional compression ratio may be selected.

The CPU 21 selects one classification data from the plurality of classification data stored in the storage device 23 (step S1507), reads the selected classification data from the storage device 23, counts the numbers of blood cells such as lymphocytes, monocytes, eosinophils, neutrophils, and basophils and the like (step S1508), and stores the count results in the storage device 23 (step 1409) . The CPU 21 also generates a scattergram such as that shown in FIG. 7, displays the count results and the scattergram on the display device 25 as leukocyte classification results (step S1510), and the process returns to step S1310 of FIG. 13. The user can visually confirm the scattergram displayed on the display device 25. Then the user can input execution instructions for executing a reclassification process according to the distribution conditions of the sampling values.

Note that the sequence of the selection classification data process in step S1507 is identical to that of FIG. 11 of the first embodiment, and further description is therefore omitted. Furthermore, the method for selecting classification data is not specifically limited, inasmuch as, for example, the CPU 21 may make the selection based on the position of appearance, and the degree of overlap of the collection regions of the lymphocytes, monocytes, basophils, neutrophils, and eosinophils or the like. Specifically, the selection may be made by (1) selecting via the magnitude of the number of particles contained in the region in which there are overlapping collection regions, (2) selecting via the magnitude of the distance between the representative value of the collection region and the representative value of each presumed region, (3) selecting via the relative position of the collection region and each presumed region, and (4) selecting via the magnitude of the surface area of the collection region and the surface area of each presumed region, or combinations of these methods.

Returning to FIG. 13, the CPU 21 of the operation display device 2 determines whether or not a reclassification instruction specifying the execution of the reclassification process has been received from the user (step S1310) ; when the CPU 21 has determined that the reclassification instruction has not been received (step S1310: NO), the CPU 21 skips steps S1311 and S1312. When the CPU 21 has determined that the reclassification instruction has been received (step S1310: YES), the CPU 21 receives the selection of other classification data (step S1311), and executes the counting process based on this selected classification data (step S1312).

The screen displaying the classification results displayed on the display device 25 of the operation display device 2 of the second embodiment is identical to that of FIG. 12, and therefore detailed description is omitted.

The CPU 21 determines whether or not a shutdown instruction has been received (step S1313); when the CPU 21 determines that a shutdown instruction has not been received (step S1313: NO), the CPU 21 returns the process to step S1303 and the process described above is repeated. When the CPU 21 has determined that a shutdown instruction has been received (step S1313: YES), the CPU 21 transmits shutdown instruction information to the measuring device 1 (step S1314).

The controller 91 of the measuring device 1 determines whether or not shutdown instruction information has been received (step S1322); when the controller 91 has determined that shutdown instruction information has not been received (step S1322: NO), the controller 91 returns the process to step S1316 and the previously described process is repeated. When the controller 91 has determined that shutdown instruction information has been received (step S1322: YES), the controller 91 executes shutdown (step S1323) and the process ends.

The second embodiment is capable of executing the counting process using optimum classification data and thus improves the accuracy of sample analysis even in the case of differences such as different animal species, different ages and different sex, by pre-generating a plurality of classification data having mutually different detection conditions and selecting optimum classification data according to the sample.

According to the second embodiment, components contained in a single measurement sample can be detected under a plurality of detection conditions. Analysis can therefore be performed based on detection results obtained under optimum detection conditions, thereby improving analysis precision without requiring the same sample to be re-measured, and without the user performing complex operations even when reanalysis must be performed under changed detection conditions.

According to the second embodiment, detection conditions are continuously changed while a single measurement sample passes through a sheath flow cell, and components contained in a single measurement sample are detected under each of the continuously set detection conditions. The measurement can therefore be completed in a short time since there is no need to supply the single measurement sample a plurality of times to the flow cell. Furthermore, degradation of the measurement sample due to supplying a single measurement sample to the flow cell multiple times, as well as reduction of analysis precision are prevented.

In the first and second embodiments, it is unnecessary the user of the analyzer herself to select the optimum classification data from among a plurality of classification data since a single classification data is automatically selected from a plurality of classification data. The operational burden on the user is therefore reduced.

Note that although the second embodiment has been described in terms of multiple setting of the detection sensitivity of the PD 506 and 512, and APD 511 which are photoreceptors for receiving the light emitted from the light-emitter 501 as the plurality of detection conditions, the detection conditions are not limited to detection sensitivity. For example, there may be multiple setting of the amplification factor of the amplifiers 61, 62, and 63 which amplify the electric signals resulting from the photoelectric conversion of the received light signals. Moreover, the intensity of the light emitted by the light-emitter 501 may also have multiple settings.

Although the controller 91 of the measuring device 1 executes controls to change the detection sensitivity of the detecting section 5 in the second embodiment described above, the CPU 21 of the operation display device 2 may also execute controls for changing the detection sensitivity of the detecting section 5. The CPU 21 of the operation display device 2 may also execute the control for changing the amplification factor when changing the detection condition of the detecting section 5 by changing the amplification factor of the amplifiers 61, 62, and 63, and similarly, the CPU 21 of the operation display device 2 may also execute control to change the emission intensity when changing the detection condition of the detecting section 5 by changing the intensity of the light emitted from the light-emitter 501. The CPU 21 of the operation display device 2 may also execute controls and the like relating to starting and stopping the storage to the internal memory of characteristic information detected by the detecting section 5, as well as controls relating to starting and stopping the supply of the measurement sample, and controls for preparing the measurement sample in the measurement sample preparing section 41.

Although a blood analyzer which analyzes blood cells contained in blood that is used as a sample is described by way of example in the above first embodiment, the present invention is not limited to this example inasmuch as the same effect may be expected when the present invention is applied to a sample analyzer which analyzes samples which contain biological particles such as cells in urine. Although the analysis results are displayed by the display device 25 of the operation display device 2 in the first and second embodiments described above, the present invention is not specifically limited to this example inasmuch as the results may also be displayed on a display device of another computer connected to a network.

Although classification data are generated by obtaining 12-bit integer sequence information as measurement data from the measuring device 1 and compressing the 12-bit integer sequence information to 8-bit integer sequence information in the first embodiment the present invention is not limited to this example inasmuch as, for example, 16-bit integer sequence information may be obtained from the measuring device 1 to generate 10-bit classification data. The measurement data and classification data need not be integer sequence information. Although the plurality of classification data represents the side scattered light intensity and side fluorescent light intensity as a plurality of common indicators in the first and second embodiments, the side scattered light intensity alone or the side fluorescent light intensity alone may represent a single indicator, a single classification data may be represented by the side scattered light intensity and the side fluorescent light intensity, other classification data may be represented by the forward scattered light intensity and side fluorescent light intensity and the like to represent a mutually different plurality of indicators.

The first and second embodiments are also applicable when analyzing blood which contains, for example, megakaryocytes, since the blood cell classification process is conducted based on a plurality of generated classification data. Since a megakaryocyte is cell which has a large nucleus, the megakaryocyte is characteristically easily stainable. Therefore, blood containing megakaryocytes can be measured by flow cytometry and a two-dimensional scattergram can be prepared which has side fluorescent light as a single parameter, and there may be cases when megakaryocytes cannot be classified readily from the cells in the blood since the megakaryocytes collect in the upper level position of the scattergram. In this case, for example, a third classification data can be generated which has integer sequence information which is more compressed than the first classification information to be used as classification data when classifying the megakaryocytes. When a scattergram such as that shown in FIG. 7 is prepared based on generated third classification data, the megakaryocytes which collect at the upper level position of the scattergram are shifted downward to a position in a region suited for classifying megakaryocytes. Thus, megakaryocytes can be well classified by conducting a classification process based on the generated third classification data.

Note that the present invention is not limited to the above embodiments and may be variously modified and transposed insofar as such modification is within the scope of the invention defined by the appended claims.

**Claims**

1. A sample analyzer (1, 2), comprising:

   a sample preparing section (41) for preparing a measurement sample from a sample and a reagent;
   a detecting section (5) for detecting a predetermined type of particle contained in one measurement sample prepared by the sample preparing section (41),
   wherein the detecting section (5) is configured to detect the predetermined type of particle optically; and
   a data processing section (21) being configured to perform operations comprising:

   (a) generating a plurality of analysis data for analyzing the predetermined type of particle based on a detection result by the detecting section (5) by expanding or compressing the detection result obtained by the detecting section (5) at mutually different ratios, wherein each of the plurality of analysis data represents a state of distribution of the predetermined type of particle;
   (b) selecting one analysis data from the plurality of analysis data based on the state of the distribution of the predetermined type of particle in the plurality of analysis data;
   (c) analyzing the predetermined type of particle based on at least the one analysis data selected in the operation (b); and
   (d) outputting an analysis result obtained in the operation (c) .

2. The sample analyzer (1, 2) of claim 1, wherein
   the plurality of analysis data represents the predetermined type of particle using a plurality of common parameters.

3. The sample analyzer (1, 2) of claim 2, wherein
   the plurality of common parameters comprise scattered light information and fluorescent light information obtained from the predetermined type of particle.

4. The sample analyzer (1, 2) of any one of claims 1 to 3, wherein
   the data processing section (21) is configured to automatically select the one analysis data from the plurality of analysis data in the operation (b).

5. A sample analyzing method comprising steps of:

   (a) optically detecting a predetermined type of particle from one measurement sample prepared from a sample and a reagent;
   (b) generating a plurality of analysis data for analyzing the predetermined type of particle based on a detection result obtained in the step (a) by expanding or compressing the detection result at mutually different ratios, wherein each of the plurality of analysis data represents a state of distribution of the predetermined type of particle;

(c) selecting one analysis data from the plurality of analysis data based on the state of the distribution of the predetermined type of particle in the plurality of analysis data;

(d) analyzing the predetermined type of particle based on the one analysis data selected in the step (c); and

(e) outputting an analysis result obtained in the step (d).

6. A computer program product for enabling a computer to control a sample analyzer (1, 2) including: a sample preparing section (41) for preparing a measurement sample from a sample and a reagent; and a detecting section (5) for detecting a predetermined type of particle contained in the measurement sample, wherein the detecting section (5) detects the predetermined type of particle optically, comprising:

a computer readable medium (23), and

software instructions (231), on the computer readable medium (23), for enabling the computer to perform predetermined operations comprising:

(a) generating a plurality of analysis data for analyzing the predetermined type of particle based on a detection result obtained by the detecting section (5) by expanding or compressing the detection result obtained by the detecting section (5) at mutually different ratios, wherein each of the plurality of analysis data represents a state of distribution of the predetermined type of particle;

(b) selecting one analysis data from the plurality of analysis data based on the state of the distribution of the predetermined type of particle in the plurality of analysis data;

(c) analyzing the predetermined type of particle based on the one analysis data selected in the operation (b); and

(d) outputting an analysis result obtained in the operation (c) .

## Patentansprüche

1. Probenanalysegerät (1, 2), umfassend:

einen Probenzubereitungsabschnitt (41) zum Zubereiten einer Messungsprobe aus einer Probe und einem Reagens;

einen Erfassungsabschnitt (5) zum Erfassen eines vorgegebenen Partikeltyps, der in einer Messungsprobe enthalten ist, die von dem Probenzubereitungsabschnitt (41) zubereitet ist,

wobei der Erfassungsabschnitt (5) konfiguriert ist, den vorgegebenen Partikeltyp optisch zu erfassen; und

einen Datenverarbeitungsabschnitt (21), der konfiguriert ist, Betriebe durchzuführen, umfassend:

(a) Erzeugen einer Vielzahl von Analysedaten zum Analysieren des vorgegebenen Partikeltyps, basierend auf einem Erfassungsergebnis von dem Erfassungsabschnitt (5) durch Ausdehnen oder Komprimieren des Erfassungsergebnisses, das durch den Erfassungsabschnitt (5) erhalten wird, bei voneinander unterschiedlichen Verhältnissen, wobei jede der Vielzahl von Analysedaten einen Verteilungszustand des vorgegebenen Partikeltyps darstellt;

(b) Auswählen eines Analysedatums aus der Vielzahl von Analysedaten, basierend auf dem Zustand der Verteilung des vorgegebenen Partikeltyps in der Vielzahl von Analysedaten;

(c) Analysieren des vorgegebenen Partikeltyps, basierend auf mindestens dem einen Analysedatum, das in dem Betrieb (b) ausgewählt ist; und

(d) Ausgeben eines Analyseergebnisses, das in dem Betrieb (c) erhalten wird.

2. Probenanalysegerät (1, 2) nach Anspruch 1, wobei
die Vielzahl von Analysedaten den vorgegebenen Partikeltyp unter Verwendung einer Vielzahl gemeinsamer Parameter darstellt.

3. Probenanalysegerät (1, 2) nach Anspruch 2, wobei
die Vielzahl von gemeinsamen Parametern Streulichtinformationen und Fluoreszenzlichtinformationen umfasst, die von dem vorgegebenen Partikeltyp erhalten werden.

4. Probenanalysegerät (1, 2) nach einem der Ansprüche 1 bis 3, wobei
der Datenverarbeitungsabschnitt (21) konfiguriert ist, automatisch das eine Analysedatum aus der Vielzahl von Analysedaten in dem Betrieb (b) auszuwählen.

5.  Probenanalyseverfahren, umfassend die Schritte zum:

(a) optischen Erfassen eines vorgegebenen Partikeltyps von einer Messungsprobe, die aus einer Probe und einem Reagens zubereitet ist;
(b) Erzeugen einer Vielzahl von Analysedaten zum Analysieren des vorgegebenen Partikeltyps, basierend auf einem Erfassungsergebnis, das in dem Schritt (a) erhalten wird, durch Erweitern oder Komprimieren des Erfassungsergebnisses bei voneinander unterschiedlichen Verhältnissen, wobei jede der Vielzahl von Analysedaten einen Verteilungszustand des vorgegebenen Partikeltyps darstellt;
(c) Auswählen eines Analysedatums aus der Vielzahl von Analysedaten, basierend auf dem Verteilungszustand des vorgegebenen Partikeltyps in der Vielzahl von Analysedaten;
(d) Analysieren des vorgegebenen Partikeltyps, basierend auf dem einen Analysedatum, das in dem Schritt (c) ausgewählt ist; und
(e) Ausgeben eines Analyseergebnisses, das in dem Schritt (d) erhalten wird.

6.  Computerprogrammprodukt zum Ermöglichen eines Computers, ein Probenanalysegerät (1, 2) zu steuern, beinhaltend: einen Probenzubereitungsabschnitt (41) zum Zubereiten einer Messungsprobe aus einer Probe und einem Reagens; und einen Erfassungsabschnitt (5) zum Erfassen eines vorgegebenen Partikeltyps, der in der Messungsprobe enthalten ist, wobei der Erfassungsabschnitt (5) den vorgegebenen Partikeltyp optisch erfasst, umfassend:

ein computerlesbares Medium (23) und
Softwarebefehle (231), auf dem computerlesbaren Medium (23), um den Computer zu ermöglichen, vorgegebene Betriebe durchzuführen, umfassend:

(a) Erzeugen einer Vielzahl von Analysedaten zum Analysieren des vorgegebenen Partikeltyps, basierend auf einem Erfassungsergebnis, das durch den Erfassungsabschnitt (5) erhalten wird, durch Ausdehnen oder Komprimieren des Erfassungsergebnisses, das durch den Erfassungsabschnitt (5) erhalten wird, bei voneinander unterschiedlichen Verhältnissen, wobei jede der Vielzahl von Analysedaten einen Verteilungszustand des vorgegebenen Partikeltyps darstellt;
(b) Auswählen eines Analysedatums aus der Vielzahl von Analysedaten, basierend auf dem Zustand der Verteilung des vorgegebenen Partikeltyps in der Vielzahl von Analysedaten;
(c) Analysieren des vorgegebenen Partikeltyps, basierend auf dem einen Analysedatum, das in dem Betrieb (b) ausgewählt ist; und
(d) Ausgeben eines Analyseergebnisses, das in dem Betrieb (c) erhalten wird.

## Revendications

1.  Analyseur d'échantillon (1, 2), comprenant :

une section de préparation d'échantillon (41) destinée à préparer un échantillon de mesure à partir d'un échantillon et d'un réactif ;
une section de détection (5) destinée à détecter un type prédéterminé de particule contenue dans un échantillon de mesure préparé par la section de préparation d'échantillon (41),
dans lequel la section de détection (5) est configurée pour détecter le type prédéterminé de particule de manière optique ; et
une section de traitement de données (21) étant configurée pour effectuer des opérations comprenant :

(a) la génération d'une pluralité de données d'analyse destinées à analyser le type prédéterminé de particule sur la base d'un résultat de détection par la section de détection (5) en élargissant ou en réduisant le résultat de détection obtenu par la section de détection (5) selon des rapports mutuellement différents, dans lequel chacune de la pluralité de données d'analyse représente un état de distribution du type prédéterminé de particule ;
(b) la sélection de certaines données d'analyse à partir de la pluralité de données d'analyse sur la base de l'état de la distribution du type prédéterminé de particule dans la pluralité de données d'analyse ;
(c) l'analyse du type prédéterminé de particule sur la base d'au moins les certaines données d'analyse sélectionnées dans l'opération (b) ; et

(d) la sortie d'un résultat d'analyse obtenu dans l'opération (c).

2. Analyseur d'échantillon (1, 2) selon la revendication 1, dans lequel
la pluralité de données d'analyse représente le type prédéterminé de particule utilisant une pluralité de paramètres communs.

3. Analyseur d'échantillon (1, 2) selon la revendication 2, dans lequel
la pluralité de paramètres communs comprend des informations de lumière diffusée et des informations de lumière fluorescente obtenues à partir du type prédéterminé de particule.

4. Analyseur d'échantillon (1, 2) selon l'une quelconque des revendications 1 à 3, dans lequel
la section de traitement de données (21) est configurée pour sélectionner automatiquement les certaines données d'analyse à partir de la pluralité de données d'analyse dans l'opération (b).

5. Procédé d'analyse d'échantillon comprenant les étapes consistant à :

(a) détecter optiquement un type prédéterminé de particule à partir d'un échantillon de mesure préparé à partir d'un échantillon et d'un réactif ;
(b) générer une pluralité de données d'analyse destinées à analyser le type prédéterminé de particule sur la base d'un résultat de détection obtenu à l'étape (a) en élargissant ou en réduisant le résultat de détection selon des rapports mutuellement différents, dans laquelle chacune de la pluralité de de données d'analyse représente un état de distribution du type prédéterminé de particule ;
(c) sélectionner certaines données d'analyse à partir de la pluralité de données d'analyse sur la base de l'état de la distribution du type prédéterminé de particule dans la pluralité de données d'analyse ;
(d) analyser le type prédéterminé de particule sur la base des certaines données d'analyse sélectionnées à l'étape (c) ; et
(e) sortir un résultat d'analyse obtenu à l'étape (d).

6. Produit de programme d'ordinateur destiné à permettre à un ordinateur de commander un analyseur d'échantillon (1, 2) incluant : une section de préparation d'échantillon (41) destinée à préparer un échantillon de mesure à partir d'un échantillon et d'un réactif ; et une section de détection (5) destinée à détecter un type prédéterminé de particule contenue dans l'échantillon de mesure, dans lequel la section de détection (5) détecte le type prédéterminé de particule de manière optique, comprenant :

un support lisible par ordinateur (23), et
des instructions de logiciel (231), sur le support lisible par ordinateur (23), destinées à permettre à l'ordinateur d'effectuer des opérations prédéterminées comprenant :

(a) la génération d'une pluralité de données d'analyse destinées à analyser le type prédéterminé de particule sur la base d'un résultat de détection obtenu par la section de détection (5) en élargissant ou en réduisant le résultat de détection obtenu par la section de détection (5) selon des rapports mutuellement différents, dans laquelle chacune de la pluralité de données d'analyse représente un état de distribution du type prédéterminé de particule ;
(b) la sélection de certaines données d'analyse à partir de la pluralité de données d'analyse sur la base de l'état de la distribution du type prédéterminé de particule dans la pluralité de données d'analyse ;
(c) l'analyse du type prédéterminé de particule sur la base des certaines données d'analyse sélectionnées dans l'opération (b) ; et
(d) la sortie d'un résultat d'analyse obtenu dans l'opération (c).

**Fig. 1**

Fig. 2

# Fig. 3

EP 2 105 723 B1

# Fig. 4

EP 2 105 723 B1

# Fig. 5

# Fig. 6

Patient information memory device

| Patient ID | Sample ID | Sex information | Age information | Disease information | Diagnostic information |
|---|---|---|---|---|---|
| ××× | ×××× | ×× | ×× | ×××× | ××× |

# Fig. 7

# Fig. 8

# Fig. 9

**Measuring device 1**

START

S915 Initialize

S916 Receive instruction information to start measurement? — NO

YES S917 Obtain identification information(sample ID)

S918 Send sample ID

S919 Patient information received? — NO

YES S920 Measure

S921 Send measurement data

S922 Shutdown instruction information received? — NO

YES S923 Execute shutdown

END

**Operation and display device 2**

START

S901 Initialize

S902 Display menu screen

S903 Measurement start instruction received? — NO

YES S904 Send instruction information to start measurement

S905 Identification information received? — NO

YES S906 Obtain patient information

S907 Send patient information

S908 Meaurement data received? — NO

YES S909 Analysis process

S910 Reclassification instruction received? — NO

YES S911 Receive other classification data selection

S912 Counting process

S913 Shutdown instruction received? — NO

YES S914 Send shutdown instruction information

END

# Fig. 10

```
        ( Analysis process )
                  │
                  ▼              S1001
        ┌──────────────────────┐
        │       n ← 1          │
        └──────────────────────┘
                  │              S1002
                  ▼
        ┌──────────────────────┐
        │  Generate and store nth │
   ┌───▶│   classification data   │
   │    └──────────────────────┘
   │              │              S1003
   │              ▼
   │         ╱ n>predetermined ╲
   │        ⟨      number?      ⟩──── YES ───┐
   │         ╲                 ╱             │
   │   S1005      │ NO    S1004              │
┌──┴──────────┐   ▼    ┌──────────────┐      │
│ Change      │        │   n ← n + 1  │      │
│ compression │◀───────┤              │      │
│ ratio       │        └──────────────┘      │
└─────────────┘                              │
                                             │
                  ┌──────────────────────────┘
                  ▼              S1006
        ┌──────────────────────┐
        │  Classification process │
        │  using first through nth │
        │   classification data   │
        └──────────────────────┘
                  │              S1007
                  ▼
        ┌──────────────────────┐
        │  Store the classification │
        │       results          │
        └──────────────────────┘
                  │              S1008
                  ▼
        ┌──────────────────────┐
        │  Select the classification │
        │       data             │
        └──────────────────────┘
                  │              S1009
                  ▼
        ┌──────────────────────┐
        │   Counting process using │
        │   selected classification │
        │        data            │
        └──────────────────────┘
                  │              S1010
                  ▼
        ┌──────────────────────┐
        │  Store counting results │
        └──────────────────────┘
                  │              S1011
                  ▼
        ┌──────────────────────┐
        │  Display counting results │
        └──────────────────────┘
                  │
                  ▼
            (    Return    )
```

# Fig. 11

Select
classification data

S1501

Child?

NO → S1103

YES

Count and store particles
of the overlap region in
each classification data

S1104

N 1 ≦ N 2 ?

NO

YES

S1105

N 1 ≦ N 3 ?

NO

YES

S1107

N 2 ≦ N 3 ?

NO

YES

S1106
Select the first
classification data

S1108
Select the third
classification data

S1102
Select second
classification data

Return

# Fig. 12

Classification result screen _ ▣ ☒

File (F) Edit(E) View(V) Data operation(R) Execute(A)

Sample ID ☒☒☒   Age ☒☒   Measurement date ☒☒☒☒

Patient ID ☒☒☒☒   Sex ☒☒   Measurement time ☒☒☒☒

WBC−DIFF

| Item | Data | Units |
|------|------|-------|
| NEUT | ☒☒☒ | $10^2/\mu L$ |
| LYMPH | ☒☒☒ | $10^2/\mu L$ |
| MONO | ☒☒☒ | $10^2/\mu L$ |
| EO | ☒☒☒ | $10^2/\mu L$ |
| BASO | ☒☒☒ | $10^2/\mu L$ |

| Item | Data | Units |
|------|------|-------|
| NEUT | ☒☒☒ | % |
| LYMPH | ☒☒☒ | % |
| MONO | ☒☒☒ | % |
| EO | ☒☒☒ | % |
| BASO | ☒☒☒ | % |

DIFF — 211

SFL / SSC

Ref.1 — 212

SFL / SSC

Ref.2 — 213

SFL / SSC

# Fig. 13

Measuring device 1

Operation and display device 2

START

START

S1315
Initialize

S1316
Receive instruction information to start measurement? — NO

YES
S1317
Obtain identification information (sample ID)

S1318
Send sample ID

S1319
Patient information received? — NO

YES
S1320
Measuring process

S1321
Send measurement data

S1322
Shutdown instruction information received? — NO

YES
S1323
Execute shutdown

END

S1301
Initialize

S1302
Display menu screen

S1303
Measurement start instruction received? — NO

YES
S1304
Send instruction information to start measurement

S1305
Identification information received? — NO

YES
S1306
Obtain patient information

S1307
Send patient information

S1308
Meaurement data received? — NO

YES
S1309
Analysis process

S1310
Reclassification instruction received? — NO

YES
S1311
Receive other classification data selection

S1312
Counting process

S1313
Shutdown instruction received? — NO

YES
S1314
Send shutdown instruction information

END

28

# Fig. 14

```
        ┌─────────────────────────┐
        │    Measuring process    │
        └─────────────────────────┘
                     │
                     ▼           S1401
        ┌─────────────────────────┐
        │ Prepare measurement sample │
        └─────────────────────────┘
                     │
                     ▼           S1402
        ┌─────────────────────────┐
        │          n ← 1          │
        └─────────────────────────┘
                     │
                     ▼           S1303
        ┌─────────────────────────┐
        │   Set nth sensitivity   │
        └─────────────────────────┘
                     │
                     ▼           S1404
        ┌─────────────────────────┐
        │ Supply measurement sample │
        └─────────────────────────┘
                     │
                     ▼           S1405
        ┌─────────────────────────┐
        │ Start storing           │
        │ characteristic information │
        └─────────────────────────┘
                     │
                     ▼           S1406
              ╱─────────────╲
             ╱ 10 seconds elapsed? ╲──── NO
             ╲               ╱
              ╲─────────────╱
                  │ YES
                  ▼           S1407
        ┌─────────────────────────┐
        │ Stop storing            │
        │ characteristic information │
        └─────────────────────────┘
                  │
                  ▼           S1408
              ╱─────────────╲
             ╱ n > predetermined ╲──── YES
             ╲    number ?    ╱
              ╲─────────────╱
                  │ NO
                  ▼           S1409
        ┌─────────────────────────┐
        │        n ← n + 1        │
        └─────────────────────────┘

        ┌─────────┐
        │ RETURN  │
        └─────────┘
```

# Fig. 15

```
        ( Analysis process )
                  │
                  ▼           S1501
        ┌─────────────────────┐
        │        n ← 1        │
        └─────────────────────┘
                  │
    ┌────────────►│           S1502
    │   ┌─────────────────────────┐
    │   │   Generate and store nth │
    │   │   classification data    │
    │   └─────────────────────────┘
    │             │
    │             ▼        S1503
    │          ◇ n > predetermined ◇
    │          ◇    number?        ◇──── YES ──┐
    │             │                            │
    │            NO                            │
    │             ▼        S1504               │
    │   ┌─────────────────────┐                │
    │   │      n ← n + 1      │                │
    │   └─────────────────────┘                │
    │             │                            │
    └─────────────┘                            │
                                               │
                  ┌────────────────────────────┘
                  ▼                  S1505
        ┌───────────────────────────┐
        │  Classification processing │
        │  using first through nth   │
        │  classification data       │
        └───────────────────────────┘
                  │                  S1506
                  ▼
        ┌───────────────────────────┐
        │  Store classification      │
        │  results                   │
        └───────────────────────────┘
                  │                  S1507
                  ▼
        ┌───────────────────────────┐
        │ │ Select classification │ │
        │ │ data                  │ │
        └───────────────────────────┘
                  │                  S1508
                  ▼
        ┌───────────────────────────┐
        │  Counting process using    │
        │  selected classification data│
        └───────────────────────────┘
                  │                  S1509
                  ▼
        ┌───────────────────────────┐
        │  Store count result        │
        └───────────────────────────┘
                  │                  S1510
                  ▼
        ┌───────────────────────────┐
        │  Display count result      │
        └───────────────────────────┘
                  │
                  ▼
            (  RETURN  )
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070111197 A
- US 6391263 B
- JP 2002277381 A
- US 5555196 A